# EUROPÄISCHE PATENTSCHRIFT

(11) **EP 3 419 195 B1**
(45) Veröffentlichungstag und Bekanntmachung des Hinweises auf die Patenterteilung: **26.02.2020**
(21) Anmeldenummer: 17177374.0
(22) Anmeldetag: 22.06.2017
(51) Int. Cl.: H04B 10/2507, H04B 10/572, H04J 14/02

(54) **VERFAHREN ZUR DATENÜBERTRAGUNG IN EINEM FILTERLOSEN OPTISCHEN NETZ**
METHOD FOR DATA TRANSMISSION IN A FILTERLESS OPTICAL NETWORK
PROCÉDÉ DE TRANSMISSION DE DONNÉES DANS UN RÉSEAU OPTIQUE SANS FILTRE

(43) Veröffentlichungstag der Anmeldung: 26.12.2018
(73) Patentinhaber: Deutsche Telekom AG, 53113 Bonn (DE)
(72) Erfinder: WISSEL, Felix, 64372 Ober-Ramstadt (DE); FUERST, Volker, 64297 Darmstadt (DE)
(74) Vertreter: Brandt & Nern Patentanwälte

(56) Entgegenhaltungen:
- EP-A1- 3 169 011
- EP-A1- 3 179 649
- US-A1- 2016 381 441

## Beschreibung

Die Erfindung betrifft ein Verfahren zur Datenübertragung in einem filterlosen optischen Netz, bei welchem Nutzdaten mittels hochfrequenten Trägersignalen übertragen werden, wobei die zur Übertragung verwendeten Trägersignale dem optischen Spektrum zugerechnet werden, wenngleich ihre Trägerfrequenz und folglich ihre mit der Trägerfrequenz jeweils korrespondierende Wellenlänge im Allgemeinen außerhalb des für das menschliche Auge sichtbaren Wellenlängen-und Frequenzbereichs liegt. Hierbei bezieht sich die Erfindung auf ein Verfahren zur Verbesserung der Ausnutzung des spektralen Übertragungsbereichs in derartigen filterlosen Netzen, welche unter Verwendung durchstimmbarer optischer Schnittstellen realisiert werden. Die Idee, optische Netze filterlos auszubilden, ist dabei selbst nicht Gegenstand der Erfindung, sondern bildet vielmehr die Ausgangssituation für die nachfolgend beschriebene Erfindung. Ein filterloses optisches Netz nach dem Stand der Technik ist aus der EP-A-3179649 bekannt.

Zur Übertragung digitaler Daten werden optische Netze mit einer Mehrzahl von Netznoten und mit diese Netzknoten als Netzkanten miteinander verbindenden Lichtwellenleitern bereits seit längerem und in größerem Umfang genutzt. Bestandteile solcher Netze sind optische Schnittstellen, welche die zu übertragenden digitalen Signale in Netzelementen der elektrischen Übermittlungsebene (zum Beispiel Router, Switche) in optische Signale wandeln. Bei modernen optischen Schnittstellen kann die Trägerwellenlänge und demgemäß auch die Trägerfrequenz des zur optischen Übertragung genutzten Trägersignals variabel ausgewählt oder eingestellt werden. Dies wird durch den Einsatz hinsichtlich ihrer Wellenlänge beziehungsweise Frequenz durchstimmbarer Laser als Sender bewerkstelligt und ist mit dem Vorteil verbunden, dass sich dadurch die Lagerhaltung der Netzausrüster vereinfacht, da nur noch ein einziger Typ optischer Schnittstellen benötigt wird.

Bei der Übertragung der Daten über die als Netzkanten fungierenden Lichtwellenleiter werden Trägersignale unterschiedlicher Frequenz und Wellenlänge, welche mit den Nutzdaten moduliert sind, über ein und dieselbe Glasfaser übertragen. Dazu werden für ein entsprechendes Netz mehrere optische Übertragungskanäle in einem festen standardisierten Raster ("ITU-T grid") definiert, in denen sich die Wellenlängen beziehungsweise Frequenzen der optischen Trägersignale jeweils voneinander unterscheiden. Ein solches Raster umfasst typischerweise 40 bis 80, gelegentlich aber auch mehr Frequenzkanäle mit einem Frequenzabstand von beispielsweise 100 GHz bis 50 GHz zwischen den Kanalmittenfrequenzen der in dem Raster festgelegten Übertragungskanäle. Als Kanalmittefrequenz wird hierbei und auch im Kontext der späteren Darstellung der erfindungsgemäßen Lösung der Frequenzwert mittig zwischen der für einen Übertragungskanal definierten unteren Frequenz und der für denselben Übertragungskanal definierten oberen Frequenz bezeichnet. Der Abstand zwischen der vorgenannten unteren Frequenz des Übertragungskanals und seiner oberen Frequenz bildet die Kanalbreite.

Die Festlegung des jeweils für eine Ende-zu-Ende-Verkehrsbeziehung verwendeten Kanals und damit der jeweils verwendeten Frequenz des Trägersignals erfolgt aufgrund planerischer Erkenntnisse und der jeweiligen Verfügbarkeit spektraler Ressourcen (Trägerfrequenzen beziehungsweise Übertragungskanäle) der einzelnen Netzsegmente, nämlich der einzelnen, jeweils zwei Netzknoten miteinander verbindenden Netzkanten des Links, also des jeweiligen Datenübertragungspfades. Ziel der Wellenlängenplanung ist es dabei, einen bezüglich der Kosten, der technischen Verfügbarkeit und des Ressourcenverbrauchs optimalen Netzbetrieb zu realisieren, welcher im Hinblick auf eventuelle Wellenlängenblockaden entlang einer Netzkante - das heißt auf die Anforderung ein und desselben Übertragungskanals für unterschiedliche Verkehrsbeziehungen - möglichst kollisionsfrei ist. Hierbei ist auch eine künftige Verkehrsentwicklung, also ein künftig zu erwartendes Datenübertragungsvolumen, zu berücksichtigen.

In optischen Netzen herkömmlicher Prägung durchläuft die Wellenlänge eines Trägersignals entlang eines optischen Links verschiedene Netzelemente, die als optische Filter fungieren und dabei jeweils nur für die Wellenlänge des ausgewählten Kanals durchlässig sind, wohingegen sie andere Wellenlängen blockieren. Beispiele für solche Filter sind Prismen oder OADMs (Optical Add Drop Multiplexer) unterschiedlichster Ausprägung oder in neueren Netzelementen rekonfigurierbare OADMs (ROADMs = reconfigurable OADMs), welche als Netzelemente unter anderem ebenfalls eine Filterfunktion besitzen beziehungsweise entsprechend ihrer Bauweise interne Baugruppen verwenden, die wellenlängenselektiv schalten können. Letztere werden auch als Wavelength-Selective Switch (WSS) bezeichnet.

Neuere Entwicklungen sind darauf gerichtet, die in einem optischen Netz herkömmlicher Prägung in großer Vielzahl benötigten, verhältnismäßig teuren Filterelemente durch den Übergang zu einer filterlosen Übertragungstechnik einzusparen. Hierbei werden alle Trägersignale mit Nutzdaten vom Sender eines Netzknotens jeweils in der Art eines Broadcast, also einer Rundsendung, an alle anderen, potenzielle Empfänger darstellende Netzknoten des optischen Netzes ausgesendet. Verarbeitet wird ein Trägersignal mit Nutzdaten jedoch nur durch das tatsächlich für seinen Empfang bestimmte Netzelement des bestimmungsgemäßen Netzknotens, welches dazu auf die entsprechende Wellenlänge des verwendeten Übertragungskanals, das heißt auf die Trägerfrequenz des über den Übertragungskanal zu empfangenden Trägersignals, eingestellt wird. Allen anderen Netzknoten ist ein Empfang des mit den Nutzdaten modulierten entsprechenden Trägersignals im Sinne einer Auskopplung nicht möglich. Die Auswertung der neben den, einem Netzknoten eigentlich zugedachten Trägersignalen mit Nutzdaten empfangenen Signale wird durch den Einsatz sogenannter kohärenter Empfänger unterdrückt. Diese kohärenten Empfänger können durch Kopplung an einen lokalen Oszillator genau auf die Frequenz (Wellenlänge) eingestellt werden, die sie auswerten sollen.

Die zuvor beschriebene filterlose optische Technik ist insbesondere für nicht zu große Netze, das heißt für Netze mit nicht zu vielen Knoten und einem nicht zu großen Vermaschungsgrad, besonders gut geeignet. Filterlos meint in diesem Zusammenhang, dass das durch den Sender eines Netzknotens ausgesendete Trägersignal mit den aufmodulierten Nutzdaten auf seinem Weg bis zum bestimmungsgemäßen Empfangsknoten keinerlei optische Filter durchläuft, wobei sich der erwähnte Vorteil einer Einsparung vieler teurer Filter ergibt. Gleichwohl sind in die Sender der einzelnen Knoten selbst jeweils sogenannten Sende- beziehungsweise Kanalfilter integriert. Aufgabe dieser Filter ist es, die Breite der einzelnen definierten Übertragungskanäle hinsichtlich des durch sie jeweils abgedeckten Frequenzbereichs zu begrenzen, um die Gefahr eines Übersprechens zwischen den Kanälen zu reduzieren oder vorzugsweise ein solches Übersprechen ganz zu verhindern. Das unerwünschte Übersprechen von Sendeleistung eines Übertragungskanals in einen benachbarten Übertragungskanal führt zwar im Allgemeinen nicht zu einer Vermischung der in beiden Kanälen übertragenen Nutzdaten, aber zu einer Verschlechterung des Signal-Rauschverhältnisses, was sich wiederum limitierend auf die maximal mögliche Übertragungslänge auswirkt.

Bei einem engen Kanalraster mit 60 bis 80 oder gar 96 Übertragungskanälen kann jedoch der Einsatz derartiger Sendefilter im Einzelfalle nicht ausreichend sein, um die Gefahr eines Übersprechens zwischen benachbarten Übertragungskanälen auszuschließen, da die Sendefilter im Hinblick auf den für einen einzelnen Übertragungskanal nach der Filterung zur Verfügung stehenden Frequenzbereich, also im Hinblick auf die Kanalbandbreite, keine beliebig schmale Filtercharakteristik aufweisen. Um ein Übersprechen dennoch zu vermeiden, besteht in diesem Fall ein Ansatz darin, für die Übertragung auf ein und derselben Netzkante nur jeden zweiten Übertragungskanal zu belegen. Ein zwischen zwei Übertragungskanälen gelegener, zwar laut Definition des Kanalrasters existierender, jedoch gemäß der zuvor beschriebenen Verfahrensweise nicht für die Übertragung genutzter Übertragungskanal bildet hierbei einen sogenannten Guard Channel, das heißt einen Schutzkanal aus. Allerdings resultiert aus einer solchen Vorgehensweise eine schlechte Ausnutzung des insgesamt für die Übertragung auf einer Netzkante zur Verfügung stehenden spektralen Übertragungsbereichs.

Aufgabe der Erfindung ist es, eine Lösung bereitzustellen, welche insbesondere gegenüber der zuletzt beschriebenen Verfahrensweise zu einer Verbesserung der Ausnutzung des spektralen Übertragungsbereichs führt. Hierzu ist ein Verfahren für die Datenübertragung in einem filterlosen optischen Netz anzugeben, welches die Verwendung möglichst vieler Übertragungskanäle des in dem Netz zur Verfügung stehenden spektralen Übertragungsbereichs bei gleichzeitiger Vermeidung des Auftretens eines Übersprechens zwischen den jeweils auf einer (das heißt ein und derselben) Netzkante verwendeten Übertragungskanälen ermöglicht.

Die Aufgabe wird durch ein Verfahren gemäß dem Patentanspruch 1 gelöst. Vorteilhafte Ausbildungen des Verfahrens sind durch die Unteransprüche gegeben.

Das vorgeschlagene Verfahren zur Datenübertragung bezieht sich gemäß der Aufgabe auf ein filterloses optisches Netz, welches aus mehreren Netzknoten mit Sendern und Empfängern und aus diese Netzknoten untereinander als Netzkanten verbindenden Lichtwellenleitern besteht, wobei die von einem Netzknoten eines solchen Netzes ausgesendeten, mit den Nutzdaten modulierten optischen Trägersignale mit Ausnahme direkt in die Sender integrierter Sendefilter - und damit bei ihrer Übertragung über das eigentliche Netz - keine optischen Filter durchlaufen. Das Verfahren geht, wie bei optischen Netzen üblich, davon aus, dass für ein solches Netz hinsichtlich der in ihm zur Übertragung verwendbaren Trägersignale eine Mehrzahl von Übertragungskanälen mit zueinander in einem festen Raster beabstandeten Kanalmittenfrequenzen (im Weiteren vereinfachend auch KMF) definiert ist, wobei zwischen auf einer Netzkante zur Übertragung von Nutzdaten verwendeten Übertragungskanälen innerhalb dieses Kanalrasters nicht für die Übertragung von Nutzsignalen verwendete Schutzkanäle vorgesehen werden. Die vorstehend genannten Sendefilter, welche als integraler Bestandteil der üblicherweise mit Lasern ausgestatteten Sender ausgebildet sind, dienen zur Begrenzung der Kanalbandbreite der einzelnen Übertragungskanäle. Bei Sendern dieser Art sind sowohl die Laser selbst als auch die zugehörigen Sendefilter in dem für das Netz vorgesehenen Spektralbereich bezüglich Wellenlänge und Frequenz durchstimmbar.

Im Zusammenhang mit der Implementierung eines entsprechenden filterlosen optischen Netzes wird nun vorgeschlagen, dass im Falle einer Verwendung unmittelbar benachbarter Übertragungskanäle auf einer (das heißt ein und derselben) Netzkante, also bei einer Belegung einander unmittelbar benachbarter Übertragungskanäle mit Nutzdaten transportierenden Trägersignalen, das Sendefilter für einen dieser Übertragungskanäle in Richtung des anderen unmittelbar benachbarten, als Schutzkanal dienenden Übertragungskanals verstimmt wird. Das heißt für den betreffenden Übertragungskanal wird die Durchlasskurve des Sendefilters, welche das Durchlassvermögen des Filters für den Übertragungskanal beschreibt, entsprechend verändert.

Eine grundsätzlich denkbare Möglichkeit einer Veränderung der Durchlasskurve eines Sendefilters für einen Übertragungskanal besteht darin, die Durchlasskurve gewissermaßen zu verformen. Durch eine entsprechende Änderung des Filterdesigns kann es dabei erreicht werden, dass zwar die Filterpeakfrequenz (FPF) des Filters für den betreffenden Kanal unverändert bleibt, also die Filterpeakfrequenz, abgesehen von üblichen Toleranzen, der für den Übertragungskanal gemäß dem Kanalraster festgelegten Kanalmittenfrequenz (KMF) entspricht, aber die Durchlasskurve des Filters insoweit verformbar ist beziehungsweise verformt wird, als dass typischerweise unterhalb und oberhalb seiner Filterpeakfrequenz in der Durchlasskurve auftretende Schultern hinsichtlich ihrer Frequenz verschoben werden. Hierdurch kann erreicht werden, dass eine der Schultern, welche andernfalls zu einem Übersprechen in einen ebenfalls belegten Nachbarkanal führen würde, frequenzbezogen gewissermaßen in den von der Verformung betroffenen Übertragungskanal hineingezogen wird, wobei gleichzeitig die auf der anderen Seite der Filterpeakfrequenz zu verzeichnende Schulter in einen unmittelbar benachbarten Schutzkanal hineinverschoben wird. Nähere Erläuterungen hierzu sollen später noch anhand einer Zeichnung gegeben werden.

Die zuvor erläuterte Möglichkeit einer Verformung der Übertragungskurve eines Sendefilters für einen Übertragungskanal erfordert jedoch, wie ausgeführt, eine grundsätzliche Veränderung des Filterdesigns. Dies ist aber im Hinblick darauf, dass entsprechende Filter aufwendig durch Lösung von Gleichungen höherer Ordnung berechnet werden müssen und auch ihre Fertigung nicht trivial ist, letztlich mit erhöhten Kosten verbunden. Zudem kann auf diesem Wege eine "Verstimmung" des Sendefilters unter Umständen auch nicht unter Ausnutzung einer Durchstimmbarkeit der Sendefilter zu erreichen sein, sondern nur durch einen Austausch der Sendefilter in den betreffenden Übertragungskanälen, wobei dies die Flexibilität der Lösung im Hinblick auf sich später eventuell verändernde Erfordernisse verringert, aber gleichwohl zumindest als theoretische Möglichkeit von der Erfindung mit umfasst sein soll.

Eine demgegenüber einfachere und daher bevorzugte Verfahrensgestaltung bezieht sich daher darauf, zur Verstimmung des Sendefilters eines Übertragungskanals lediglich die Filterpeakfrequenz des Sendefilters und damit, bezogen auf diesen Übertragungskanal, gewissermaßen dessen gesamte Übertragungskurve bei ansonsten im Wesentlichen unveränderter Kurvenform gegenüber der für den von der Verstimmung betroffenen Übertragungskanal definierten Kanalmittenfrequenz (KMF) um einen Betrag Δf in Richtung der KMF eines unmittelbar benachbarten Schutzkanals zu verschieben. Dies lässt sich im Hinblick auf die ohnehin gegebene Durchstimmbarkeit der Sendefilter mit vergleichsweise geringem Aufwand bewerkstelligen. Zudem ist entsprechend dieser Ausgestaltungsform des erfindungsgemäßen Verfahrens in besonders vorteilhafter Weise eine Verstimmung von Sendefiltern durch Verschieben ihrer Filterpeakfrequenz auch im Netzbetrieb, das heißt bei einem in Betrieb befindlichen Netz, ohne Umbauten möglich.

Unter der Filterpeakfrequenz (FPF) - im Weiteren vereinfachend auch nur mit FPF bezeichnet - soll in den vorstehenden Ausführungen, in den nachfolgenden Erläuterungen und in den Patentansprüchen jeweils die Frequenz eines Sendefilters verstanden werden, bei welcher dieses das höchste Durchlassvermögen bezüglich dem vom zugehörigen Sender, genauer gesagt vom zugehörigen Sendelaser, des Übertragungskanals ausgesendeten Trägersignal aufweist. Ohne Verstimmung des Sendefilters oder bei einer Verstimmung durch Verformung der Kurve im Sinne eines Verschiebens der in der Durchlasskurve auftretenden Schultern ist dabei die FPF idealerweise gleich der KMF des zugehörigen Übertragungskanals, wohingegen die FPF gemäß der zuletzt erläuterten und bevorzugten Ausgestaltungsform des Verfahrens gezielt um Δf gegen die KMF des zugehörigen Übertragungskanals verschoben wird.

In Abhängigkeit von der Enge des Kanalrasters und damit von der jeweiligen Kanalbreite der in dem Kanalraster definierten Übertragungskanäle kann dabei eine Verschiebung der FPF des Sendefilters für einen zu verstimmenden Übertragungskanal um ungefähr 10 % bis 20 % des durch den konstanten Abstand der Kanalmittenfrequenzen der Übertragungskanäle festgelegten Kanalabstandes erfolgen, wobei im Falle eines sehr engen Kanalrasters mit 80 bis 96 Übertragungskanälen nur eine sich eher im unteren Bereich des vorstehend genannten Intervalls bewegende Verschiebung der FPF erfolgen wird.

Es erfolgt demnach eine Aufhebung der nach dem Stand der Technik vorgesehenen starren Kopplung zwischen der KMF des Trägersignals als der in einem Übertragungskanal für das ausgesendete Trägersignal festgelegten Frequenz und der FPF als der für dieses Trägersignal in der Optik tatsächlich realisierten Übertragungsfrequenz des betreffenden Übertragungskanals, nämlich der Frequenz, bei welcher schließlich in dem Übertragungskanal durch einen Empfänger die maximale Leistung empfangen wird.

Man erhält hierbei auch die Möglichkeit, sich gewissermaßen im Nachhinein für eine Richtung der Verschiebung der FPF des Sendefilters, nämlich für eine Verschiebung nach links oder rechts beziehungsweise nach unterhalb oder oberhalb der im Kanalraster für einen jeweils zugehörigen Übertragungskanal definierten, das heißt eigentlich vorgesehenen KMF zu entscheiden. Hierdurch wird es möglich, dass man nicht je einen kompletten Kanal ober- und unterhalb eines auf einer Kante genutzten Übertragungskanals als Schutzband aufwenden, also ungenutzt lassen muss, sondern eben nur einen Übertragungskanal entweder unterhalb oder oberhalb eines unter Verschiebung der FPF gegen die definierte KMF genutzten Übertragungskanals. Im Ergebnis dessen wird demnach eine bessere Ausnutzung des für die Netzkante grundsätzlich zur Verfügung stehenden spektralen Übertragungsbereichs erreicht.

Die Verstimmung des Sendefilters durch die Verschiebung seiner Filterpeakfrequenz (FPF) gegenüber der KMF des zugehörigen Übertragungskanals um einen geringfügigen Betrag Δf mit ansonsten gleichem Verlauf der Filterkurve hat zudem den Vorteil, dass bei einem bestehenden filterlosen optischen Netz lediglich einen weiterer Konfigurationsparameter für das Netz eingeführt und entsprechend anpasst werden muss. Die Sendefilter sind nämlich, wie schon ausgeführt, eigentlich bereits so ausgelegt, dass ihre FPF verschiebbar ist, nur geschieht eine gegebenenfalls erfolgende Verschiebung gemäß den bisher vorgesehenen Lösungsansätzen in festen Abständen, die genau zu dem Kanalraster passen, gemäß welchem auch die Sendefrequenz der Sendelaser verschoben werden kann. Die zuletzt beschriebene, bevorzugte Ausgestaltungsform des erfindungsgemäßen Verfahrens ist nun dadurch zu realisieren, dass in einem für die Verschiebung der FPF eines Sendefilters verwendeten (softwarebasierten) "Verschiebebefehl" ein zweiter Parameter vorgesehen und hierdurch das Einstellen der KMF des Sendelasers von der Einstellung der FPF des Sendefilters getrennt wird.

Die Kanalmittenfrequenz (KMF) ist relativ zu dem gewählten Kanalraster konstant "in der Mitte" zwischen der für einen jeweiligen Übertragungskanal festgelegten unteren und oberen Frequenz, wobei dies für alle Übertragungskanäle und deren jeweilige Sender (und Empfangseinheiten) gilt. Demgegenüber ist die Filterpeakfrequenz (FPF) eine dynamische Größe, die zwar bezüglich der eigentlichen Filtercharakteristik, also auf der Durchlasskurve eines jeweiligen Sendefilters, immer die gleiche Position einnimmt, aber je nach Einstellung bei einem anderen - unter Anwendung der zuletzt beschriebenen Ausgestaltungsform des erfindungsgemäßen Verfahrens von der KMF des zugehörigen Übertragungskanals abweichenden - Frequenzwert liegt.

Soweit vorstehend und in dem Patentanspruch 1 von einer Verstimmung eines jeweiligen Sendefilters im Falle einer Belegung zweier unmittelbar benachbarter Übertragungskanäle auf einer Netzkante die Rede ist, meint dies lediglich, dass bei Anwendung des erfindungsgemäßen Verfahrens jedenfalls bei einer solchen Belegungskonstellation eine Verstimmung eines Sendefilters erfolgt, nicht aber, dass die Anwendung des Verfahrens auf eine (gegebenenfalls auf der Netzkante mehrmals erfolgende) Belegung zweier unmittelbar benachbarter Übertragungskanäle beschränkt wäre. Vielmehr ist es unter Anwendung des erfindungsgemäßen Verfahrens sogar möglich auf einer Netzkante (gegebenenfalls wiederum innerhalb des zur Verfügung stehenden Übertragungsspektrums mehrmals) drei unmittelbar benachbarte Übertragungskanäle mit einem Trägersignal zu belegen.

Im Falle der Belegung zweier unmittelbar benachbarter Übertragungskanäle auf einer Netzkante wird entweder das Sendefilter jeweils für den hinsichtlich der für ihn definierten KMF oberen Übertragungskanal in Richtung eines unmittelbar benachbarten Schutzkanals mit einer höheren KMF oder das Sendefilter jeweils für den hinsichtlich der für ihn definierten KMF niedrigeren Übertragungskanal in Richtung eines unmittelbar benachbarten Schutzkanals mit einer niedrigeren KMF verstimmt.

Sofern, wie bei Anwendung des erfindungsgemäßen Verfahrens ebenfalls möglich, auf einer Netzkante drei unmittelbar benachbarte Übertragungskanäle belegt werden, wird dem Rechnung getragen, indem das Sendefilter jeweils für den hinsichtlich der für ihn definierten KMF obersten der drei Übertragungskanäle in Richtung eines unmittelbar benachbarten Schutzkanals mit einer noch höheren KMF verstimmt wird, wohingegen außerdem das Sendefilter jeweils für den hinsichtlich der für ihn definierten KMF niedrigsten der drei Übertragungskanäle in Richtung eines unmittelbar benachbarten Schutzkanals mit einer noch niedrigeren KMF verstimmt wird.

An dieser Stelle sei der Vollständigkeit halber lediglich erwähnt, dass das Ziel einer besseren Ausnutzung des für eine Netzkante zur Verfügung stehenden wellenlängen- beziehungsweise frequenzbezogenen Übertragungsbereichs im Zusammenhang mit dem vollständigen Neuaufbau eines filterlosen optischen Netzes grundsätzlich auch dadurch erreicht werden könnte, dass gezielt die Trägermittenfrequenz einzelner, der ebenfalls durchstimmbaren Sender gegenüber der für den Übertragungskanal in dem Kanalraster theoretisch festgelegten Kanalmittenfrequenz verstimmt wird. Jedoch ist derartiges bei einem bereits bestehenden Netz, welches schrittweise für eine bessere Ausnutzung des spektralen Übertragungsbereichs ertüchtigt werden soll, indem in einzelnen Netzabschnitten das herkömmliche Prinzip des Guard Channels (Schutzkanals) angewendet und in anderen Netzabschnitten bereits auch eine Belegung unmittelbar benachbarter Übertragungskanäle zugelassen werden soll, nicht möglich.

Unter Nutzung des vorgeschlagenen Verfahrens, gemäß welchem gezielt die Übertragungskurve der Sendefilter für einzelne Kanäle verstimmt wird, ist jedoch ein solcher Mischbetrieb problemlos möglich. Darüber hinaus ist das Verfahren selbstverständlich auch im Zusammenhang mit dem vollständigen Neuaufbau eines filterlosen optischen Netzes ohne weiteres anwendbar.

Details der Erfindung sollen nachfolgend nochmals anhand von Beispielen erläutert werden. In den zugehören Zeichnungen zeigen:
- Fig. 1:: mehrere unterschiedliche "Filtersituationen",
- Fig. 2:: eine beispielhafte schematische Netztopologie eines optischen (filterlosen) Netzes,
- Fig. 3:: Belegungszustände für in bestehenden Verkehrsbeziehungen genutzte Netzkanten in dem Netz gemäß der Fig. 2,
- Fig. 4:: die Auswirkungen der Verstimmung eines Sendefilters bei Verstimmung durch Verschiebung der Filterpeakfrequenz (FPF),
- Fig. 5:: die Auswirkungen der Verstimmung eines Sendefilters bei Verstimmung durch Verformung der Durchlasskurve,
- Fig. 6:: mögliche Belegungen einer Netzkante, einerseits mit einer Kanalbelegung unter Nutzung des Prinzips des Guard Channels (a) und andererseits unter Nutzung des erfindungsgemäßen Verfahrens (b und c).

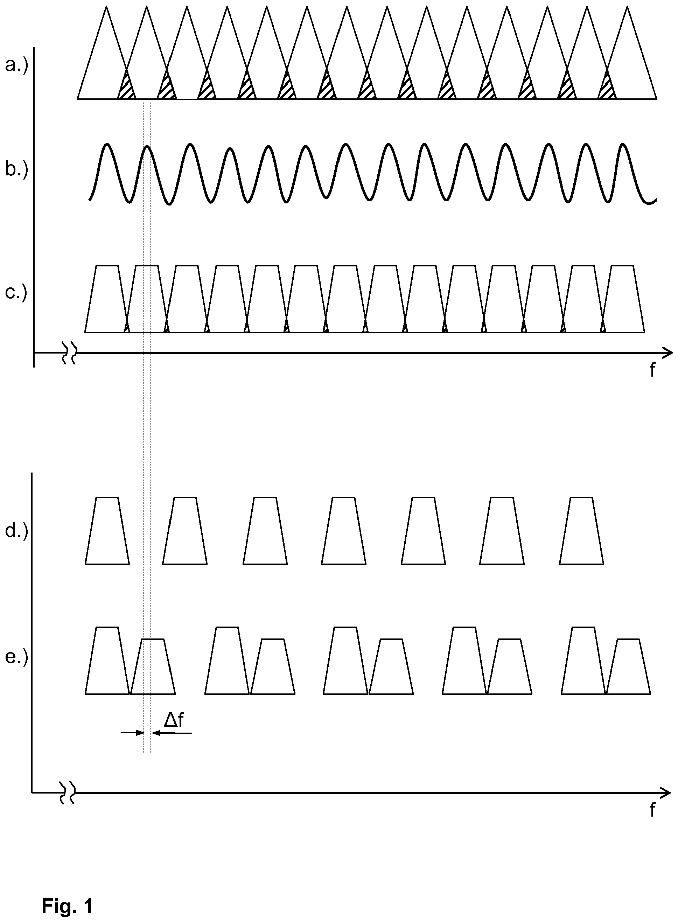

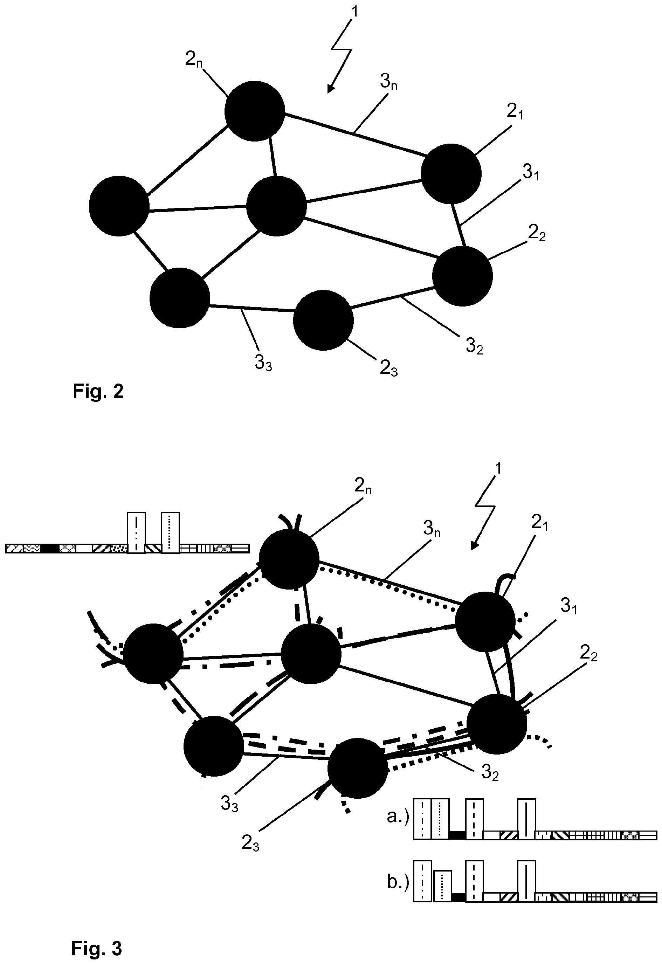

Die Fig. 1 zeigt mehrere unterschiedliche "Filtersituationen" als Funktion der Frequenz in einer schematischen Darstellung. Da es hierbei nur um die prinzipielle Veranschaulichung der Filtersituationen geht, so unter e) insbesondere auch der Filtersituation bei der Anwendung des erfindungsgemäßen Verfahrens, ohne dass insoweit Bezug auf konkrete Werte genommen wird, sind einerseits die Verläufe der Übertragungskurven in den einzelnen Übertragungskanälen beispielsweise in Form von Dreiecken und Trapezen idealisiert dargestellt und andererseits die Achsen der Diagrammdarstellung nicht beschriftet. In der Diagrammdarstellung bezieht sich die x-Achse, wie bereits ausgeführt und ersichtlich, auf die Frequenz, wohingegen sich die y-Achse auf die Sendeleistung (Kurve a), auf die von den Sendefiltern durchgelassene Sendeleistung (Kurve b) oder auf die durch mit entsprechenden Sendefiltern ausgestattete Sender jeweils ausgesendete und folglich - wegen des Fehlens sonstiger Filterelemente im Netz 1 (siehe Fig. 2 oder 3) - bei den Empfängern an dem Netzknoten 2₁ - 2ₙ am anderen Ende einer betrachteten Netzkante 3₁ - 3ₙ (unter Vernachlässigung von Dämpfungseffekten) aufgrund der entsprechenden Filtersituation bezüglich einer jeweiligen Frequenz eingehende Leistung (Kurven c bis e) bezieht.

Die Fig. 1 veranschaulicht - wie gesagt schematisiert beziehungsweise stark vereinfacht - unter a) beispielhaft ein zur Verfügung stehendes Übertragungsspektrum mit 14 Kanälen im Falle einer Aussendung entsprechender Trägersignale durch die Senderlaser eines Netzknotens 2₁ - 2ₙ, nämlich von 14 Trägersignalen mit zueinander gleichbeabstandeter Kanalmittenfrequenz (KMF). Hierbei veranschaulicht die Spitze eines jeweiligen Dreiecks jeweils die für einen Übertragungskanal entsprechend dem festgelegten Kanalraster definierte Kanalmittenfrequenz (KMF), welche normalerweise derjenigen Frequenz entspricht, für welche die im jeweiligen Übertragungskanal ausgesendete Trägerfrequenz ein Leistungsmaximum aufweist. Die schraffiert dargestellten Bereiche symbolisieren das Übersprechen zwischen den einzelnen Übertragungskanälen.

Unter b) ist in der Fig. 1 die Übertragungscharakteristik der Sendefilter in einem Netzwerkknoten 2₁ - 2ₙ für die einzelnen Übertragungskanäle veranschaulicht. Hier bezeichnen die jeweiligen lokalen Maxima der dargestellten Funktion diejenigen Frequenzen, bei welchen das entsprechende Sendefilter die geringste Dämpfung beziehungsweise die höchste Durchlässigkeit aufweist.

Durch die Überlagerung des unter a) gezeigten Spektrums mit der unter b) veranschaulichten Filtercharakteristik entsteht das Sendespektrum gemäß c) der Fig. 1. Durch eine entsprechende Schmalbandigkeit der Sendefilter der einzelnen Übertragungskanäle wird das gemäß a) ursprünglich von den Sendelasern ausgesendete Spektrum in den unter c) gezeigten Verlauf überführt. Wie ersichtlich, werden hierbei einerseits die Leistungsmaxima in den einzelnen Übertragungskanälen verringert und andererseits, bezogen auf den jeweiligen Frequenzbereich die Bandbreiten der einzelnen Übertragungskanäle so weit reduziert, dass einander benachbarte Übertragungskanäle nur noch geringfügig überlappen, also zwischen ihnen nur ein geringes Übersprechen (schraffierte kleine Dreiecke) auftritt. Zwischen der gemäß dem festgelegten Kanalraster für einen jeweiligen Übertragungskanal definierten KMF und der FPF der jeweiligen Sendefilter der einzelnen Übertragungskanäle besteht hierbei eine starre Kopplung.

Gleichwohl ist aufgrund der hohen Dichte der Übertragungskanäle beziehungsweise des geringen Kanalabstands trotz des Einsatzes der Sendefilter zwischen benachbarten Kanälen ein geringes Übersprechen zu verzeichnen. Um auch ein solches geringes Übersprechen möglichst zu vermeiden, wird entsprechend einem diskutierten Lösungsansatz, wie aus d) in der Fig. 1 ersichtlich, eine Verfahrensweise gewählt, gemäß welcher jeder zweite Übertragungskanal in dem festgelegten Kanalraster für die Übertragung von Nutzdaten nicht verwendet wird, sondern als Schutzkanal dient. Hierdurch reduziert sich jedoch die Zahl der tatsächlich verwendeten Übertragungskanäle gegenüber der entsprechend dem festgelegten Kanalraster theoretisch möglichen Gesamtzahl der Übertragungskanäle um die Hälfte. Der grundsätzlich für die Übertragung von Nutzdaten zur Verfügung stehende Spektralbereich der Trägerfrequenzen wird demgemäß vergleichsweise schlecht ausgenutzt.

Einen hiervon abweichenden Weg verfolgt das vorgestellte Verfahren, gemäß welchem sich beispielsweise ein spektraler Verlauf, wie unter e) in der Fig. 1 dargestellt ist, einstellt. Wie ersichtlich, ist hierbei beispielsweise in zwei zueinander unmittelbar benachbarten Übertragungskanälen die Filterpeakfrequenz (FPF) des Sendefilters des jeweils im Frequenzband höher gelegenen Übertragungskanals durch eine entsprechende Verstimmung des Sendefilters gegenüber der für diesen Übertragungskanal gemäß dem festgelegten Kanalraster definierten KMF geringfügig, nämlich um einen Betrag Δf, nach oben, das heißt zu höheren Frequenzwerten hin, verschoben worden. Erst der hinsichtlich seiner KMF nächsthöher gelegene Übertragungskanal wird hierbei als Guard Channel (Schutzkanal) definiert, in welchem keine Datenübertragung erfolgt.

Wie aus e) in der Fig. 1 ersichtlich, werden hierdurch in dem auf einer jeweiligen Netzkante 3₁ - 3ₙ zur Verfügung stehenden spektralen Übertragungsbereich insgesamt mehr Übertragungskanäle genutzt als gemäß d). Die Tatsache, dass aufgrund der Verstimmung der Sendefilter einzelner der Übertragungskanäle in diesen Übertragungskanälen die Sendeleistung insgesamt etwas stärker reduziert wird, ist dabei weitgehend unschädlich. Dies begründet sich dadurch, dass die maximal mögliche Übertragungslänge eines filterlosen optischen Netzes 1 in der Regel rauschbegrenzt ist, das heißt, dass die kilometrische Systemreichweite durch das Rauschen und nicht durch die Sendeleistung respektive durch die beim Empfänger ankommende Leistung des optischen Signals bestimmt wird. Die größere Dämpfung des Sendesignals wird sich daher in der Regel nicht reichweitenbegrenzend auswirken. Vorteilhaft ist es zudem, dass eine Verstimmung der jeweiligen Sendefilter durch eine geringfügige Verschiebung ihrer PFP, auch im Netzbetrieb, also bei schon bestehendem und in Betrieb genommenem Netz 1, vorgenommen werden kann.

Die Fig. 2 zeigt beispielhaft in einer schematischen Darstellung eine mögliche Netztopologie eines optischen Netzes 1, wobei mit Blick auf das hier beschriebene erfindungsgemäße Verfahren von einem filterlosen optischen Netz 1 ausgegangen wird. Das beispielhaft gezeigte Netz 1 weist sieben Netzknoten 2₁ - 2ₙ und elf diese Netzknoten 2₁ - 2ₙ untereinander verbindende Netzkanten 3₁ - 3ₙ auf. Die Verbindung der Netzknoten 2₁ - 2ₙ untereinander ist derart, dass nicht jeder Netzknoten 2₁ - 2ₙ unmittelbar mit jedem anderen Netzknoten 2₁ - 2ₙ, aber jedenfalls zumindest über einen oder mehrere der anderen Netzknoten 2₁ - 2ₙ verbunden ist. Die (nicht gezeigten) Sender der einzelnen Netzknoten 2₁ - 2ₙ sind jeweils mit (ebenfalls nicht gezeigten) durchstimmbaren Sendefiltern ausgestattet, jedoch durchläuft ein von einem Netzknoten 2₁ - 2ₙ ausgesendetes, mit Nutzdaten moduliertes Trägersignal auf seinem Weg durch das Netz 1 dann keinerlei weitere Filtereinheiten oder Filterelemente mehr, da das Netz 1 entsprechende Filtereinheiten nicht aufweist.

Die Fig. 3 zeigt beispielhaft mögliche Verkehrsbeziehungen bei der Übertragung von Nutzdaten über das Netz 1 gemäß der Fig. 2 und die sich hieraus ergebende Belegung einzelner Netzkanten 3₁ - 3ₙ. Die unterschiedlichen Linientypen symbolisieren dabei in Bezug auf das schematisierte Netz 1 und, damit korrespondierend, in den Balkendarstellungen die Verwendung unterschiedlicher Übertragungskanäle und damit unterschiedlicher Trägerfrequenzen für die unterschiedlichen Verkehrsbeziehungen. Die Zeichnung stellt die frequenzbezogene Belegung der Übertragungskanäle eines Ausschnitts des Gesamtübertragungsspektrums dar, wobei auf einer jeweiligen Netzkante 3₁ - 3ₙ genutzte Übertragungskanäle als lange und ungenutzte (unbelegte) Übertragungskanäle als kurze Balken beziehungsweise Lücken dargestellt sind. Wie ersichtlich, wird demgemäß die Netzkante 3₂ unter Belegung zweier unmittelbar benachbarter Übertragungskanäle genutzt (Strich-Punkt-Linie und punktierte Linie). Hieraus würde ohne die Anwendung des erfindungsgemäßen Verfahrens (Balkendiagramm a) die Gefahr eines Übersprechens zwischen diesen beiden Übertragungskanälen resultieren. Um jedoch ein derartiges Übersprechen zu vermeiden, wird das Sendefilter des hinsichtlich seiner Trägerfrequenz höherfrequente Übertragungskanal durch Verschieben seiner FPF (Balkendiagramm b) geringfügig gegenüber der für diesen Übertragungskanal laut festgelegtem Kanalraster definierten KMF verstimmt.

Bei einem Kanalraster mit einem Abstand von 100 GHz zwischen den einzelnen Übertragungskanälen kann die entsprechende Verschiebung der FPF des betreffenden Sendefilters gegen die für den Übertragungskanal festgelegte KMF durchaus beispielsweise 17 GHz oder 18 GHz, also fast 20 % des Kanalabstandes, betragen. Bei einem engeren Kanalraster mit einem Kanalabstand von zum Beispiel nur 50 GHz käme eher eine geringere Verschiebung von ca. 6 GHz-8 GHz in Betracht. Die bei der Umsetzung des Verfahrens gemäß seiner bevorzugten Ausgestaltungsform tatsächlich vorzusehende Verschiebung der FPF des Sendefilters gegen die KMF hängt aber auch stark von der Modulationsrate ab. Für geringe Datenübertragungsraten ist die tatsächliche Bandbreite relativ gering, woraus verhältnismäßig viel freies (nicht für die Übertragung von Nutzdaten verwendetes) Spektrum zwischen den Übertragungskanälen resultiert. Bei höheren Datenübertragungsraten wird es hingegen zwischen den Übertragungskanälen "enger".

In welchem der Übertragungskanäle die FPF des Sendefilters gegen die für den Kanal definierte KMF verschoben wird, hängt von der Belegung der insgesamt durchlaufenen Netzkanten 3₁ - 3ₙ ab. Bei einer nur eine Netzkante 3₁ - 3ₙ verwendenden Ende-zu-Ende-Verbindung ist dies egal. Werden hingegen in die Verbindung zwei oder mehr Netzkanten 3₁ - 3ₙ einbezogen, würde hierfür derjenige Übertragungskanal, ausgewählt, welcher über den gesamten Übertragungsweg, das heißt über alle einbezogenen Netzkanten 3₁ - 3ₙ hinweg betrachtet des wenigsten "Seitendruck" hat, also für welchen in allen verwendeten Netzkanten 3₁ - 3ₙ insgesamt am wenigsten sowohl der frequenzmäßig unmittelbar benachbart unterhalb liegende als auch der frequenzmäßig unmittelbar benachbart oberhalb liegende Übertragungskanal verwendet wird.

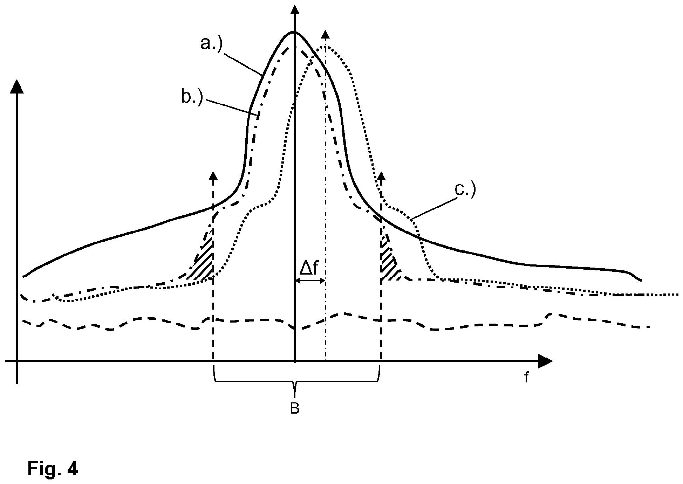

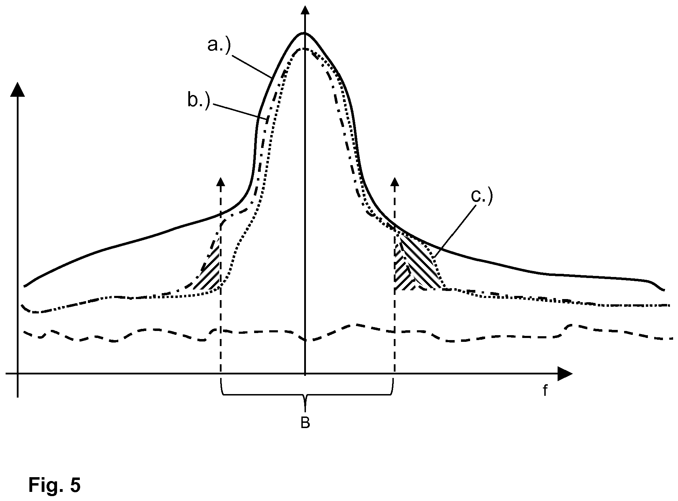

Die Figuren 4 und 5 zeigen beispielhaft zwei Möglichkeiten der Verstimmung des Sendefilters für einen Übertragungskanal unter Anwendung des erfindungsgemäßen Verfahrens anhand der sich hierbei jeweils für die Durchlasskurve des Sendefilters in dem Übertragungskanal ergebenden Auswirkungen, wobei es in diesem Zusammenhang ohne Belang ist, ob die Verstimmung durch eine Verformung der Durchlasskurve oder durch eine Verschiebung seiner FPF bewirkt wird, wenngleich letzterem der Vorrang zu geben ist. In den dargestellten Diagrammen ist für jeweils unterschiedliche Situationen, nämlich für den Fall eines gänzlichen Verzichts auf ein Sendefilter a.) (durchgezogene Linie) für den Fall der Verwendung eines nicht im Sinne des erfindungsgemäßen Verfahrens verstimmten Sendefilters b.) (Strich-Punktlinie) sowie für den Fall einer Verstimmung des Sendefilters c.) (punktierte Linie) durch Verschiebung seiner FPF (Fig. 4) oder durch Verformung seiner Übertragungskurve (Fig. 5) die vom Sendefilter durchgelassene Leistung des Trägersignals über der Frequenz aufgetragen. In beiden Figuren 4 und 5 verdeutlichen die gestrichelten Linien mit Endpfeil jeweils die für den betrachteten Übertragungskanal festgelegte obere (rechte Linie) und untere (linke Linie) Frequenz, deren Differenz die Kanalbreite B des Übertragungskanals angibt. Die sich zwischen diesen beiden gestrichelten Linien nach oben erstreckende durchgezogene Linie mit dem Endpfeil bezeichnet die für den Übertragungskanal definierte Kanalmittenfrequenz.

Fig. 4 dient der beispielhaften Veranschaulichung der sich unter Einsatz des erfindungsgemäßen Verfahrens durch Verschiebung der FPF des Sendefilters gegenüber der definierten KMF für die Durchlasskurve des Sendefilters ergebenden Auswirkungen. Kurve a) zeigt hierbei zunächst den Verlauf der Leistung des Trägersignals über der Frequenz für den Fall eines gänzlichen Verzichts auf ein Sendefilter. Die unter a) dargestellte Kurve ergibt sich demnach im Wesentlichen (unter Vernachlässigung der Dämpfung des Lichtwellenleiters und anderer Netzelemente) aus der Sicht eines das entsprechende Trägersignal emittierenden Senders wie aus der Sicht eines das mit Nutzdaten modulierte (die Modulierung mit den Nutzdaten ist nicht dargestellt) Trägersignal empfangenden Empfängers des Netzknotens 2₁ - 2ₙ am anderen Ende einer betrachteten Netzkante 3₁ - 3ₙ (zu Netzknoten und Netzkanten siehe Fig. 2 und 3).

Die Kurve gemäß b) zeigt den Verlauf der Leistung des Trägersignals über der Frequenz beim Einsatz eines Sendefilters ohne Anwendung des erfindungsgemäßen Verfahrens. Die Darstellung verdeutlicht den Kurvenverlauf hinter dem Sendefilter, also aus der Sicht eines das Trägersignal in einem Netzknoten 2₁ - 2ₙ empfangenden Empfängers. Wie zu erkennen ist, ergibt sich hierbei ein Kurvenverlauf mit einer aufgrund des Filtereinsatzes gegenüber dem Verlauf der Kurve a) grundsätzlich etwas gedämpften Leistung des Trägersignals. Zu erkennen ist ferner, dass das Dämpfungsverhalten des Sendefilters nicht über den gesamten hier betrachten Spektralbereich gleich ist. So kommt es, wie ersichtlich, in den Randbereichen des Übertragungskanals, der gemäß Definition jeweils durch die mit gestrichelten Linien mit Endpfeil verdeutlichten Frequenzwerte begrenzt ist, zur Ausbildung sogenannter Schultern in der Übertragungskurve, welche durch die schraffierten Flächen symbolisiert werden. Im Falle einer Belegung auch der unmittelbar benachbarten Übertragungskanäle machen diese Schultern sich als Übersprechen bemerkbar und verschlechtern somit in den unmittelbar benachbarten Übertragungskanälen das Signal-Rauschverhältnis.

Die Darstellung gemäß der Fig. 4 geht nun davon aus, dass auf einer Netzkante 3₁ - 3ₙ der hinsichtlich seines frequenzbezogenen Leistungsverlaufs gezeigte Übertragungskanal und der bezüglich der Frequenz unmittelbar unterhalb dieses Übertragungskanals definierte Übertragungskanal mit einen Trägersignal belegt sind. Um das Übersprechen in den unmittelbar unterhalb definierten Übertragungskanal hinein zu verhindern, aber jedenfalls deutlich zu verringern, wird die Übertragungskurve des Sendefilters gemäß der unter c) gezeigten Kurve verstimmt, indem die FPF (gekennzeichnet durch die Strichpunktlinie mit Endpfeil) des Sendefilters für den hinsichtlich seines leistungsmäßigen Verlaufs gezeigten Übertragungskanal gegenüber der für diesen Übertragungskanal definierten KMF um den Betrag Δf zu höheren Frequenzwerten hin und damit in den oberhalb des gezeigten Übertragungskanals unmittelbar benachbarten Schutzkanal hineinverschoben wird.

Mit der Fig. 4 vergleichbar sind die Gegebenheiten gemäß der Fig. 5, welche die Auswirkungen einer Verstimmung des Sendefilters durch Verformung seiner Übertragungskurve beim Einsatz des erfindungsgemäßen Verfahrens zeigen. Hierbei stellen wiederum die Kurve a) die Verhältnisse für den Fall eines Verzichts auf Sendefilter, die Kurve b) die Verhältnisse beim Einsatz eines Sendefilters, jedoch ohne Anwendung des erfindungsgemäßen Verfahrens sowie die Kurve c) den sich bei Anwendung des erfindungsgemäßen Verfahrens aufgrund einer Verformung der Übertragungskurve des Sendefilters ergebenden Kurvenverlauf dar. Abweichend von der Fig. 4 ist hierbei mit der Kurve c) ein frequenzbezogener Leistungsverlauf dargestellt, wie er sich ergeben könnte beim Einsatz eines gegenüber der Kurve b) bezüglich seines Übertragungsverhaltens anderen (anders designten) Sendefilters. Die Kurve c) geht hierbei von einer Umsetzung des Verfahrens durch den Einsatz eines Sendefilters aus, dessen FPF zwar mit der für den Übertragungskanal definierten KMF übereinstimmt, welches aber in den Frequenzbereichen unterhalb und oberhalb dieser FPF ein gegenüber dem gemäß der Kurve b) verwendeten Sendefilter anderes Übertragungsverhalten aufweist. Das Übertragungsverhalten des gemäß c) verwendeten Sendefilters ist dabei derart, dass die untere Schulter seiner Übertragungskurve, welche geringfügig in den frequenzmäßig unterhalb des betrachteten Übertragungskanals definierten sowie ebenfalls mit einem Trägersignal belegten Übertragungskanal hineinragt, weniger stark ausgebildet ist als bei dem gemäß der Kurve b) eingesetzten Sendefilter. Dies wird gewissermaßen mit einer demgegenüber stärker ausgeprägten Schulter im Kurvenverlauf oberhalb der FPF des Sendefilters "erkauft". Diese stärker ausgeprägte obere Schulter ragt jedoch in einen oberhalb des betrachteten Übertragungskanals vorgesehenen Schutzkanal hinein und hat daher keine nachteiligen Auswirkungen.

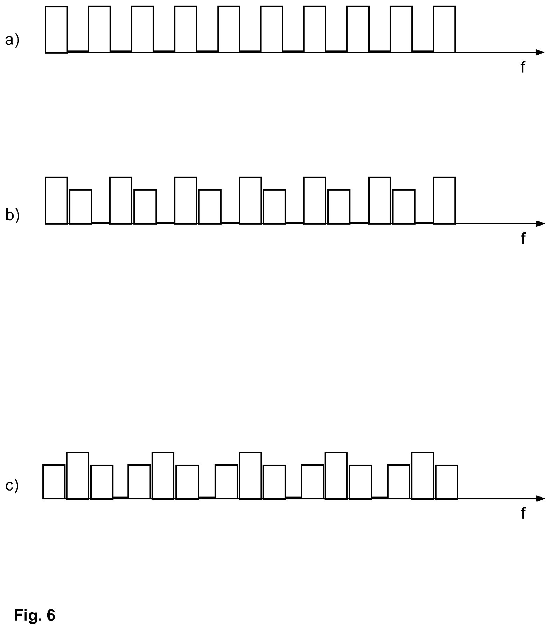

Die Fig. 6 zeigt unterschiedliche Belegungen einer Netzkante 3₁ - 3ₙ (zu Netzkante siehe Fig. 2 und 3), nämlich die Belegung einer Netzkante 3₁ - 3ₙ unter Nutzung des Prinzips des Guard Channels, aber ohne Anwendung des erfindungsgemäßen Verfahrens (Kurve beziehungsweise Balkendiagramm a), sowie zwei mögliche Kantenbelegungen bei Anwendung des erfindungsgemäßen Verfahrens (Balkendiagramme b und c). Die symbolisch dargestellten Kantenbelegungen geben hierbei in den einzelnen Übertragungskanälen nicht den tatsächlichen spektralen Leistungsverlauf (Kurvenverlauf) wieder. Vielmehr sind in der Darstellung lediglich nur ohne Verstimmung des Sendefilters belegte Kanäle durch lange Balken, mit Verstimmung des zugehörigen Sendefilters belegte Kanäle durch kurze Balken sowie Schutzkanäle durch Lücken symbolisch veranschaulicht.

Die Darstellung a) zeigt eine mögliche Kantenbelegung ohne Anwendung des erfindungsgemäßen Verfahrens aber unter Nutzung des Prinzips des Guard Channels. Von den dabei innerhalb des betrachteten Frequenzintervalls definierten, das heißt theoretisch möglichen 20 Übertragungskanälen werden, wie aus der Darstellung ersichtlich, nur 10 Kanäle belegt, also zur Datenübertragung mittels eines entsprechenden Trägersignals genutzt. Zwischen diesen belegten Übertragungskanälen wird jeweils ein Schutzkanal vorgesehen, der, obwohl theoretisch möglich, nicht für die Datenübertragung genutzt wird. Demnach dient jeder zweite Übertragungskanal des definierten Kanalrasters als Schutzkanal zur Vermeidung eines Übersprechens.

Gemäß der unter b) gezeigten Darstellung werden unter Anwendung des erfindungsgemäßen Verfahrens auf derselben Kante innerhalb desselben Spektralbereichs jeweils zwei unmittelbar benachbarte Übertragungskanäle belegt, also für die Übertragung von Nutzdaten verwendet. Hierbei ist das Sendefilter des jeweils oberen Übertragungskanals (Übertragungskanal mit höherer KMF) eines solchen Paares unmittelbar benachbarter, belegter Übertragungskanäle gemäß der Erfindung verstimmt, also entweder hinsichtlich seiner Übertragungskurve in den nächsthöheren Schutzkanal hinein verformt oder bezüglich seiner FPF in Richtung dieses Schutzkanals verschoben. Dies ist dadurch angedeutet, dass der Übertragungskanal, für welchen das Sendefilter jeweils entsprechend verstimmt ist, in Bezug auf seine Belegung mit einem Trägersignal jeweils in Form eines kürzeren Balkens dargestellt ist. Wie ersichtlich, werden dadurch von den theoretisch möglichen beziehungsweise innerhalb des betrachteten Spektralbereichs definierten 20 Übertragungskanälen 13 Übertragungskanäle für die Übertragung von Nutzdaten verwendet. Demnach erfolgt also gegenüber der unter a) gezeigten Darstellung eine wesentlich bessere Auslastung des zur Verfügung stehenden Spektralbereichs.

Gemäß der unter c) gezeigten Darstellung wird unter Anwendung des erfindungsgemäßen Verfahrens auf derselben Kante sogar eine Verwendung jeweils dreier unmittelbar benachbarter Übertragungskanäle zugelassen. Hierbei wird der jeweils frequenzmäßig untere Übertragungskanal eines solchen Kanaltripels in Richtung eines unmittelbar benachbarten Schutzkanals mit einer noch niedrigeren KMF und der jeweils obere Übertragungskanal des Kanaltripels in Richtung eines unmittelbar benachbarten Schutzkanals mit einer noch höheren KMF verstimmt. Hierdurch ist es möglich, von den gemäß dem festgelegten Kanalraster innerhalb des betrachteten Spektralbereichs definierten 20 Übertragungskanälen 15 zu nutzen, so dass sich eine noch bessere Ausnutzung des Spektralbereichs ergibt. Wie ohne weiteres erkennbar wird, ergibt sich bei einer höheren Anzahl definierter (theoretisch nutzbarer) Übertragungskanäle bezüglich der Ausnutzung des Übertragungsspektrums zwischen den Fällen b) und c) ein noch günstigeres Verhältnis zugunsten des Falls c), also der Zulassung einer Belegung dreier unmittelbar benachbarter Kanäle mit einem Trägersignal.

In den Darstellungen gemäß b) und c) sind jeweils der frequenzmäßig unterhalb des letzten belegten Übertragungskanals gelegene Frequenzbereich sowie der jeweils oberhalb des letzten belegten Übertragungskanals befindliche Frequenzbereich, auch wenn diese Frequenzbereiche möglicherweise nicht mehr zu dem definierten Kanalraster gehören, gleichwirkend einem Schutzkanal anzusehen, da jedenfalls diese Frequenzbereiche ebenfalls nicht für die Übertragung von Nutzdaten verwendet werden.

## Patentansprüche

1. Verfahren zur Datenübertragung in einem filterlosen optischen Netz (1), in welchem die von Sendern eines Netzknotens (2₁ - 2ₙ) emittierten, mit Nutzdaten modulierten optischen Trägersignale bei der Übertragung über das aus mehreren Netzknoten (2₁ - 2ₙ) mit Sendern und Empfängern und aus diese Netzknoten (2₁ - 2ₙ) untereinander als Netzkanten (3₁ - 3ₙ) verbindenden Lichtwellenleitern bestehende Netz (1) mit Ausnahme in die Sender integrierter Sendefilter keine Filter durchlaufen, wobei für das Netz (1) hinsichtlich der in ihm zur Übertragung von Nutzdaten verwendbaren Trägersignale eine Mehrzahl von Übertragungskanälen mit zueinander in einem festen Kanalraster beabstandeten Kanalmittenfrequenzen definiert ist und wobei zwischen auf einer Netzkante (3₁ - 3ₙ) zur Übertragung von Nutzdaten verwendeten Übertragungskanälen nicht für die Übertragung von Nutzsignalen verwendete Schutzkanäle innerhalb des Kanalrasters vorgesehen werden, **dadurch gekennzeichnet, dass** bei einer Belegung einander unmittelbar benachbarter Übertragungskanäle einer Netzkante (3₁ - 3ₙ) mit Nutzdaten transportierenden Trägersignalen das Sendefilter für einen dieser Übertragungskanäle bezüglich seiner das Durchlassvermögen für das diesen Übertragungskanal belegende Trägersignal beschreibenden Durchlasskurve in Richtung seines anderen unmittelbar benachbarten, als Schutzkanal dienenden Übertragungskanals verstimmt wird.

2. Verfahren nach Anspruch 1, **dadurch gekennzeichnet, dass** zur Verstimmung eines Sendefilters dessen Filterpeakfrequenz gegenüber der für den von der Verstimmung betroffenen Übertragungskanal definierten Kanalmittenfrequenz um einen Betrag Δf in Richtung der Kanalmittenfrequenz des unmittelbar benachbarten Schutzkanals verschoben wird.

3. Verfahren nach Anspruch 2, **dadurch gekennzeichnet, dass** die Filterpeakfrequenz des Sendefilters um 10 % bis 20 % des in dem Kanalraster durch den konstanten Abstand der Kanalmittenfrequenzen der Übertragungskanäle festgelegten Kanalabstandes gegenüber der für den von der Verstimmung betroffenen Übertragungskanal festgelegten Kanalmittenfrequenz verstimmt wird.

4. Verfahren nach einem der Ansprüche 1 bis 3, **dadurch gekennzeichnet, dass** für jede Kante die Belegung jeweils zweier unmittelbar benachbarter Übertragungskanäle mit Nutzdaten transportierenden Trägersignalen zugelassen wird, und dass im Falle der Belegung zweier unmittelbar benachbarter Übertragungskanäle auf einer Netzkante (3₁ - 3ₙ) entweder das Sendefilter jeweils für den hinsichtlich der für ihn definierten Kanalmittenfrequenz oberen Übertragungskanal in Richtung eines unmittelbar benachbarten Schutzkanals mit einer höheren Kanalmittenfrequenz oder das Sendefilter jeweils für den hinsichtlich der für ihn definierten Kanalmittenfrequenz niedrigeren Übertragungskanal in Richtung eines unmittelbar benachbarten Schutzkanals mit einer niedrigeren Kanalmittenfrequenz verstimmt wird.

5. Verfahren nach einem der Ansprüche 1 bis 3, **dadurch gekennzeichnet, dass** für jede Kante die Belegung jeweils dreier unmittelbar benachbarter Übertragungskanäle mit Nutzdaten transportierenden Trägersignalen zugelassen wird, und dass im Falle der Belegung dreier unmittelbar benachbarter Übertragungskanäle auf einer Netzkante (3₁ - 3ₙ) das Sendefilter jeweils für den hinsichtlich der für ihn definierten Kanalmittenfrequenz obersten der drei Übertragungskanäle in Richtung eines unmittelbar benachbarten Schutzkanals mit einer noch höheren Kanalmittenfrequenz und das Sendefilter jeweils für den hinsichtlich der für ihn definierten Kanalmittenfrequenz niedrigsten der drei Übertragungskanäle in Richtung eines unmittelbar benachbarten Schutzkanals mit einer noch niedrigeren Kanalmittenfrequenz verstimmt wird.

## Claims

1. Method for data transmission in a filterless optical network (1) in which the optical carrier signals emitted by transmitters of a network node (2₁ - 2ₙ) and modulated with useful data do not pass through any filters, with the exception of transmission filters integrated in the transmitters, on transmission via the network (1) consisting of multiple network nodes (2₁ - 2ₙ) comprising transmitters and receivers and of optical fibres connecting said network nodes (2₁ - 2ₙ) to one another as network edges (3₁ - 3ₙ), wherein a plurality of transmission channels at channel centre frequencies spaced apart from one another in a fixed channel pattern is defined for the network (1) in consideration of the carrier signals useable thereon for transmitting useful data and wherein there is provision, between transmission channels used for transmitting useful data on a network edge (3₁ - 3ₙ), for guard channels within the channel pattern that are not used for transmitting useful signals, **characterized in that** when directly adjacent transmission channels of a network edge (3₁ - 3ₙ) are occupied by carrier signals transporting useful data, the transmission filter for one of these transmission channels has its pass curve, which describes the transmissivity for the carrier signal occupying this transmission channel, detuned in the direction of its other directly adjacent transmission channel, which is used as a guard channel.

2. Method according to Claim 1, **characterized in that** a transmission filter is detuned by virtue of the filter peak frequency thereof being shifted, relative to the channel centre frequency defined for the transmission channel affected by the detuning, by an absolute value Δf in the direction of the channel centre frequency of the directly adjacent guard channel.

3. Method according to Claim 2, **characterized in that** the filter peak frequency of the transmission filter is detuned, relative to the channel centre frequency stipulated for the transmission channel affected by the detuning, by 10% to 20% of the channel interval stipulated in the channel pattern by the constant interval between the channel centre frequencies of the transmission channels.

4. Method according to one of Claims 1 to 3, **characterized in that** the occupation of two respective directly adjacent transmission channels by carrier signals transporting useful data is permitted for each edge, and **in that** in the event of two directly adjacent transmission channels on a network edge (3₁ - 3ₙ) being occupied, either the transmission filter for the respective upper transmission channel in consideration of the channel centre frequency defined for said transmission channel is detuned in the direction of a directly adjacent guard channel having a higher channel centre frequency or the transmission filter for the respective lower transmission channel in consideration of the channel centre frequency defined for said transmission channel is detuned in the direction of a directly adjacent guard channel having a lower channel centre frequency.

5. Method according to one of Claims 1 to 3, **characterized in that** the occupation of three respective directly adjacent transmission channels by carrier signals transporting useful data is permitted for each edge, and **in that** in the event of three directly adjacent transmission channels on a network edge (3₁ - 3ₙ) being occupied, the transmission filter for the respective uppermost of the three transmission channels in consideration of the channel centre frequency defined for said transmission channel is detuned in the direction of a directly adjacent guard channel having an even higher channel centre frequency and the transmission filter for the respective lowest of the three transmission channels in consideration of the channel centre frequency defined for said transmission channel is detuned in the direction of a directly adjacent guard channel having an even lower channel centre frequency.

## Revendications

1. Procédé de transmission de données dans un réseau optique sans filtre (1), dans lequel les signaux optiques porteurs émis par des émetteurs d'un nœud de réseau (2₁ - 2ₙ) et modulés avec des données utiles ne passent par aucun filtre lors de la transmission par l'intermédiaire du réseau (1), lequel est constitué de plusieurs nœuds de réseau (2₁ - 2ₙ) comportant des émetteurs et des récepteurs et de guides d'ondes optiques reliant lesdits nœuds de réseau (2₁ - 2ₙ) entre eux en tant que bordures de réseau (3₁ - 3ₙ), à l'exception des filtres d'émission intégrés dans les émetteurs, dans lequel une pluralité de canaux de transmission présentant des fréquences centrales de canal espacées les unes des autres dans une trame de canal fixe est définie pour le réseau (1) en ce qui concerne les signaux porteurs qui peuvent être utilisés dans celui-ci pour la transmission de données utiles et dans lequel des canaux de garde non utilisés pour la transmission de signaux utiles sont prévus à l'intérieur de la trame de canal entre des canaux de transmission utilisés sur une bordure de réseau (3₁ - 3ₙ) pour la transmission de données utiles, **caractérisé en ce que**, lorsque des canaux de transmission directement adjacents les uns aux autres d'une bordure de réseau (3₁ - 3ₙ) sont occupés par des signaux porteurs transportant des données utiles, le filtre d'émission pour l'un desdits canaux de transmission est désaccordé par rapport à sa courbe de bande passante décrivant la capacité de bande passante pour le signal porteur occupant ledit canal de transmission en direction de son autre canal de transmission immédiatement adjacent servant de canal de garde.

2. Procédé selon la revendication 1, **caractérisé en ce que**, pour désaccorder un filtre d'émission, son pic de fréquence de filtre est décalé d'une quantité Δf dans la direction de la fréquence centrale de canal du canal de garde immédiatement adjacent par rapport à la fréquence centrale de canal définie pour le canal de transmission affecté par le désaccord.

3. Procédé selon la revendication 2, **caractérisé en ce que** le pic de fréquence de filtre du filtre d'émission est désaccordé de 10% à 20% de l'espacement de canaux, qui est établi dans la trame de canal par l'espacement constant entre les fréquences centrales des canaux de transmission par rapport à la fréquence centrale de canal de canal établie pour le canal de transmission affecté par le désaccord.

4. Procédé selon l'une des revendications 1 à 3, **caractérisé en ce que**, pour chaque bordure, l'occupation respective de deux canaux de transmission directement adjacents par des signaux porteurs transportant des données utiles est autorisée, et **en ce qu'**en cas d'occupation de deux canaux de transmission directement adjacents sur une bordure de réseau (3₁ - 3ₙ), soit le filtre d'émission est respectivement désaccordé pour le canal de transmission supérieur du point de vue de la fréquence centrale de canal définie pour celui-ci en direction d'un canal de garde immédiatement adjacent présentant une fréquence centrale de canal plus élevée, soit le filtre d'émission est respectivement désaccordé pour le canal de transmission inférieur du point de vue de la fréquence centrale de canal définie pour celui-ci en direction d'un canal de garde immédiatement adjacent présentant une fréquence centrale de canal plus basse.

5. Procédé selon l'une des revendications 1 à 3, **caractérisé en ce que**, pour chaque bordure, l'occupation respective de trois canaux de transmission directement adjacents par des signaux porteurs transportant des données utiles est autorisée, et **en ce qu'**en cas d'occupation de trois canaux de transmission directement adjacents sur une bordure de réseau (3₁ - 3ₙ), le filtre d'émission est respectivement désaccordé pour le plus haut des trois canaux de transmission du point de vue de la fréquence centrale de canal définie pour celui-ci en direction d'un canal de garde immédiatement adjacent présentant une fréquence centrale de canal encore plus élevée et le filtre d'émission est respectivement désaccordé pour le plus bas des trois canaux de transmission du point de vue de la fréquence centrale de canal définie pour celui-ci en direction d'un canal de garde immédiatement adjacent présentant une fréquence centrale de canal encore plus basse.
